# FASCICULE DE BREVET EUROPEEN

(11) **EP 2 907 649 B1**
(45) Date de publication et mention de la délivrance du brevet: **04.09.2019**
(21) Numéro de dépôt: 15155232.0
(22) Date de dépôt: 16.02.2015
(51) Int. Cl.: B29C 51/10, B29C 51/08, B29C 65/00, A61J 1/10, B29C 51/02, B29C 51/12, B29C 51/14, B29C 51/26, B29C 51/00, A01N 1/02, B29L 31/00, B29K 23/00, B29L 9/00

(54) **PROCÉDÉ DE FABRICATION D'AU MOINS UN RÉCIPIENT SOUPLE EN MATIÈRE PLASTIQUE**
HERSTELLUNGSVERFAHREN MINDESTENS EINES FLEXIBLEN BEHÄLTERS AUS PLASTIKMATERIAL
METHOD FOR MANUFACTURING AT LEAST ONE FLEXIBLE PLASTIC CONTAINER

(30) Priorité: 18.02.2014 FR 1451268
(43) Date de publication de la demande: 19.08.2015
(73) Titulaire: Technoflex, 64210 Bidart (FR)
(72) Inventeur: Angot, Maxime, 64210 AHETZE (FR); Demonpezat, Jérôme, 64100 BAYONNE (FR); Capitaine, François, 64600 ANGLET (FR)
(74) Mandataire: Ipside

(56) Documents cités:
- WO-A2-2009/138966
- DE-A1-102011 004 173
- GB-A- 1 567 337

## Description

### ARRIERE-PLAN DE L'INVENTION

### Domaine de l'invention

La présente invention concerne un procédé de fabrication d'au moins un récipient souple tridimensionnel notamment pour le stockage cryogénique de substances biologiques.

### Arrière-plan technologique

On connaît des poches souples pour le stockage cryogénique de substances biologiques fragiles telles que le sang.

On connaît dans l'état de la technique la demande de brevet britannique N° GB 1 567 337 A, qui se rapporte à un procédé de fabrication d'un récipient à partir de deux parties de bande superposées.

On connaît également dans l'état de la technique la demande de brevet allemand N° DE 10 2011 004173 A1, qui concerne un procédé de fabrication d'un sac d'emballage.

On connaît également dans l'état de la technique la demande PCT N° WO 2009/138966 A2, qui se rapporte à un procédé de fabrication d'un sac pour la cryoconservation des liquides thermolabiles.

Certaines poches souples en matière plastique présentent une géométrie tridimensionnelle particulière visant à limiter les contraintes susceptibles de s'appliquer à de très basses températures sur les substances biologiques qu'elles contiennent, de sorte à minimiser les pertes de substances biologiques.

On connaît ainsi des poches souples destinées à la cryogénisation d'échantillons biologiques liquides comprenant deux feuilles de matière plastique présentant chacune une géométrie tridimensionnelle, lesquelles sont soudées sur leur périphérie pour définir un volume de stockage. Ces poches souples comprennent également au moins un port pour accéder à leur volume de stockage en vue de son remplissage et/ou de son vidage avec une substance biologique liquide.

La fabrication de ces poches souples nécessite plusieurs étapes distinctes dont notamment la réalisation des feuilles, la mise en forme de chacune de ces feuilles indépendamment l'une de l'autre pour conférer à celles-ci une géométrie spécifique, la superposition des feuilles ainsi mises en forme et l'assemblage par soudure de celles-ci avec au moins un connecteur sur leur périphérie.

Or, on observe que la fabrication d'une telle poche souple de stockage cryogénique est non seulement longue et coûteuse, mais au surplus expose cette poche à un risque réel de contamination de ses surfaces intérieures délimitant le volume de stockage.

A titre d'exemple, une telle contamination peut survenir lors de la manipulation des feuilles ainsi mises en forme au cours de l'étape de superposition.

Bien entendu, si une contamination du volume intérieur de la poche souple survenait, elle pourrait résulter en une contamination de la substance biologique destinée à être contenue dans le volume de stockage de cette poche avec des germes potentiellement mortels pour un patient en cours de traitement.

Un tel risque de contamination est également constaté avec un autre procédé de fabrication de poche souple tridimensionnelle par thermoformage dans lequel un insert ayant une forme, une largeur et une épaisseur correspondant à la forme, à la largeur et à l'épaisseur internes de la poche souple à fabriquer, est placé entre les deux feuilles superposées.

Bien entendu, quelque soit le soin apporté ultérieurement à la stérilisation des poches souples ainsi fabriquées, il ne peut être garanti de manière sûre que tous les germes et/ou particules aient été éradiqués.

Par conséquent, les risques pour la santé des patients, liés à la mise en oeuvre de substances biologiques contaminées par des poches infectées, rendent ces procédés de fabrication imparfaits pour un usage médical.

Par ailleurs, ces procédés de fabrication de poches souples par thermoformage ne permettent pas de réaliser de manière aisée et fiable des structures de stockage complexes comportant, par exemple, plusieurs chambres de stockage reliées entre elles par des portions de mise en communication de fluide.

Les dimensions réduites de chacune de ces chambres de stockage par rapport aux dimensions du moule posent de sérieuses difficultés dans leur mise en forme individuelle et/ou de reproductibilité.

Il existe donc un besoin pressant pour un procédé de fabrication de récipients à usage médical autorisant la réalisation de structures complexes comprenant une pluralité de chambres de stockage et/ou de portions de mise en communication de fluide, la forme de chaque élément individuel de ces structures étant conforme à une géométrie préétablie et reproductible.

### Objet de l'invention

La présente invention vise en conséquence à pallier ces divers inconvénients en proposant un procédé de fabrication d'un récipient souple tridimensionnel particulièrement simple dans sa conception et dans son mode opératoire, économique et permettant de limiter au maximum le risque de contamination du volume de stockage tout au long du processus de fabrication du récipient.

Un objectif de la présente invention est également de proposer un tel procédé de fabrication d'un récipient souple tridimensionnel présentant moins d'étapes, et donc plus rapide et économe.

Un autre objet de la présente invention est un tel procédé de fabrication permettant de réaliser simultanément plusieurs récipients ainsi qu'un circuit d'alimentation de ces récipients pour faciliter le remplissage de ces récipients avec une substance biologique, tout en garantissant la conformité de chaque récipient ou circuit d'alimentation à des formes préétablies.

### BREVE DESCRIPTION DE L'INVENTION

A cet effet, l'invention concerne un procédé de fabrication selon la revendication 1 d'au moins un récipient souple en matière plastique, chaque récipient comprenant deux parois séparées en regard assemblées sur au moins une partie de leur pourtour par un bord périphérique scellé, lesdites parois séparées définissant un volume de stockage.

Selon l'invention, on réalise au moins les étapes suivantes :
a) former un empilement de deux feuilles de matière plastique, lesdites feuilles étant plaquées l'une contre l'autre, les surfaces en regard de ces feuilles étant placées directement en contact l'une avec l'autre sans aucun élément faisant interface,
b) conformer simultanément lesdites feuilles ainsi plaquées l'une contre l'autre pour définir ledit au moins un récipient sans avoir préalablement séparé celles-ci, au moins chaque récipient étant en partie formé, lesdites feuilles étant maintenues plaquées l'une contre l'autre dans au moins une partie des zones desdites feuilles destinées à constituer ledit bord périphérique de chaque récipient lors de cette conformation, et
c) sceller au moins en partie les zones desdites feuilles destinées à constituer ledit bord périphérique d'au moins chaque récipient.

Le procédé de la présente invention permet donc la fabrication d'au moins un réservoir souple destiné au stockage de substances liquides et/ou de poudres et notamment au stockage cryogénique de substances biologiques, de manière simple, rapide et économe, ce récipient présentant une forme tridimensionnelle fournissant une contenance optimisée et une résistance accrue aux contraintes liées à la cryogénisation.

En outre, les feuilles étant plaquées l'une contre l'autre, on limite toute introduction de contaminants entre ces feuilles qui pourraient se retrouver in fine dans le volume de stockage.

A l'étape b), on conforme donc simultanément lesdites feuilles ainsi plaquées sans avoir préalablement placé entre ces feuilles un insert tel qu'une pièce de moulage rapportée.

De manière avantageuse, à l'étape b), chaque récipient ainsi conformé présente une forme, une largeur et un espacement entre les parois libres correspondant à celles du récipient correspondant à former.

Lorsque plusieurs récipients sont formés simultanément, ces récipients peuvent être identiques ou au moins certains d'entre eux peuvent être identiques. Alternativement, chaque récipient formé peut encore être de forme tridimensionnelle distincte.

De préférence, plusieurs récipients étant formés simultanément, on réalise également conjointement des conduits ou encore des pontages de forme tubulaire, pour mettre ces récipients en communication de fluide. Il est ainsi possible de créer un circuit d'alimentation de ces récipients qui non seulement limite l'exposition de chaque récipient à une éventuelle contamination mais autorise également un remplissage en une seule fois de l'ensemble de ces récipients avec un matériau biologique.

A l'étape b), lesdites feuilles peuvent être maintenues plaquées l'une contre l'autre par scellement préalable des feuilles dans au moins une partie des zones desdites feuilles destinées à constituer ledit bord périphérique de chaque récipient ou par l'intermédiaire des surfaces des parties de moule appliquées l'une contre l'autre ou encore par le biais d'un joint délimitant au moins une partie des zones desdites feuilles destinées à constituer ledit bord périphérique de chaque récipient.

Ces feuilles peuvent être maintenues plaquées l'une contre l'autre sur l'intégralité des zones desdites feuilles destinées à constituer ledit bord périphérique de chaque récipient. Alternativement, il peut s'agir d'une partie seulement de ces zones, par exemple, pour permettre :
- l'insertion d'un ou plusieurs éléments d'accès, ou
- la réalisation d'un ou plusieurs logements destinés à recevoir chacun un élément d'accès au volume intérieur de stockage, la réalisation de ces logement permettant d'éviter une éventuelle aspiration de particules et/ou de germes lors de l'insertion de chaque élément d'accès entre les feuilles de l'empilement, ou encore
- la réalisation d'une ou plusieurs extensions des parois de la poche sous la forme de tubulures fermées, lesquelles définissent chacune un volume en communication de fluide avec le volume intérieur de stockage de la poche.
Bien entendu, dans ces deux derniers cas, les cavités du moule servant à conformer chaque récipient présentent les formes et dimensions requises. Cet élément d'accès peut être un port, un connecteur ou une tubulure.

Dans différents modes de réalisation particuliers de ce procédé, chacun ayant ses avantages particuliers et susceptibles de nombreuses combinaisons techniques possibles:
- pour chaque récipient, on réalise une étape supplémentaire consistant à insérer entre lesdites feuilles au moins un élément d'accès à son volume de stockage, cet élément d'accès permettant la communication de fluide entre ce volume de stockage et l'extérieur,
- on scelle au moins en partie lesdites zones desdites feuilles destinées à constituer ledit bord périphérique de chaque récipient avant de réaliser l'étape b).
Cette étape est avantageusement réalisée par soudure des feuilles sur leur périphérie. Il peut s'agir, à titre purement illustratif, d'une soudure haute fréquence.
- à l'étape b), on définit également par conformation desdites feuilles, un logement pour chaque élément d'accès au volume de stockage du ou des récipients, chaque logement étant configuré pour recevoir l'élément d'accès correspondant.
Il ne reste alors plus qu'à assembler définitivement l'élément d'accès qui peut être un connecteur ou une tubulure, audit logement formé dans le bord périphérique du récipient.
Cet assemblage pouvant être réalisé par soudure, on constate avantageusement que la réalisation de ce logement dans lequel est inséré l'élément d'accès facilite leur soudage.
- à l'étape b), on définit également par conformation desdites feuilles au moins un conduit, ou pontage, relié à un bord périphérique d'au moins un récipient pour assurer son remplissage, ledit conduit définissant un canal intérieur en communication de fluide avec le volume de stockage dudit au moins un récipient.
Ayant rempli ledit ou lesdits récipients, on scelle le reste des feuilles séparées au niveau dudit bord périphérique de chaque récipient de manière à fermer chaque récipient.
- lesdites feuilles sont également maintenues plaquées l'une contre l'autre en au moins une zone distincte dudit bord périphérique d'un ou plusieurs récipients pour fractionner le volume interne du ou des récipients correspondants,
- à l'étape b), on conforme simultanément lesdites deux feuilles en au moins un récipient souple sans séparer lesdites feuilles lors de cette conformation,
On empêche ainsi avantageusement toute contamination de l'espace séparant lesdites feuilles, ou interface, lors de l'étape de conformation.
Après avoir fermé au moins en partie chaque récipient, on sépare lesdites feuilles au niveau de chaque récipient par l'introduction du seul matériau biologique destiné à être contenue dans ce récipient ou par circulation d'un fluide gazeux contrôlé de manière à limiter la contamination de ce récipient.
A titre illustratif, ce fluide gazeux pourra avoir été filtré de manière à en éliminer les germes et particules. Par exemple, ce fluide gazeux est de l'air, de l'argon ou de l'azote. Bien entendu, l'invention n'est pas limitée à la mise en oeuvre de ces seuls fluides gazeux.
- à l'étape b), on conforme lesdites feuilles par moulage par aspiration, ou sous vide relatif.
Alternativement, à l'étape b), on conforme lesdites feuilles par moulage par déformation à chaud.
De préférence, que les feuilles soient conformées par moulage par aspiration ou par moulage par déformation à chaud, on place ledit empilement entre deux parties de moules qui peuvent être espacées l'une de l'autre et appliquées l'une contre l'autre en définissant alors une ou plusieurs cavités, au moins une de ces cavités correspondant à la forme et aux dimensions externes d'un récipient à fabriquer, cette ou ces dernières cavités étant alors fermées au niveau d'une portion de leur périphérie correspondant à une portion du bord périphérique du récipient correspondant à former.
De préférence, pour le moulage par aspiration, chaque partie de moule, ou au moins une de ces parties de moule, comporte plusieurs orifices reliés à une ou plusieurs unités de pompage.
Selon un premier mode de réalisation, les parties de moule peuvent comporter chacune une cavité de moulage par aspiration, la cavité de la première partie de moule étant l'image de la cavité de la deuxième partie de moule, les cavités coïncidant lorsque les première et deuxième parties de moule sont appliquées l'une contre l'autre.
Selon un deuxième mode de réalisation, la première partie de moule peut comporter au moins deux cavités, au moins certaines de ces cavités étant identiques ou chacune définissant une forme distincte. Ces cavités de la première partie de moule sont l'image des cavités de la deuxième partie de moule de sorte que les parties de moule étant appliquées l'une contre l'autre, ces cavités coïncidant pour définir des formes tridimensionnelles.
Un joint d'étanchéité peut être prévu pour délimiter au moins en partie chaque cavité à l'intérieur du moule.
Selon un troisième mode de réalisation, une première partie de moule peut présenter une ou plusieurs cavités ayant la forme tridimensionnelle externe de chaque récipient à réaliser, la deuxième partie de moule étant une plaque plane de sorte qu'on conforme simultanément lesdites deux feuilles en au moins un récipient souple sur une même partie de moule sans séparation desdites feuilles lors de cette conformation.
De manière préférentielle, pour le moulage par déformation à chaud, une des parties du moule comporte au moins une empreinte fixe formant saillie de ladite partie moule, cette ou au moins une desdites empreintes ayant une forme, des dimensions et un espacement par rapport à la surface de la partie moule immédiatement environnante à ladite empreinte, qui correspondent à la forme, aux dimensions externes et à la moitié ou sensiblement la moitié de l'espacement séparant les parois délimitant le volume de stockage du récipient correspondant à fabriquer, l'autre partie de moule étant évidée au niveau de ladite ou desdites empreintes.
- après l'étape b) et avant l'étape c), on réalise une étape supplémentaire consistant à refroidir ledit au moins un récipient.
Bien entendu, lors de l'étape de conformation, l'empilement est de préférence chauffé avant sa mise en forme par moulage par aspiration afin de faciliter cette mise en forme.
- tout au long d'au moins lesdites étapes a) à c), on contrôle le milieu dans lequel est placé l'empilement de deux feuilles de manière à limiter la présence de la biocharge et de particules susceptibles de transporter cette biocharge.
Au niveau du dispositif permettant de réaliser l'étape b), on fait avantageusement circuler un flux d'air de haut en bas, c'est-à-dire un flux laminaire, pour plaquer vers le sol les particules ou la biocharge présentes dans l'atmosphère environnant ce dispositif.
On limite ainsi la possibilité d'une éventuelle contamination de l'empilement. On peut également déioniser ledit empilement pour éliminer les charges électrostatiques susceptibles d'attirer les contaminations ambiantes, et notamment les particules porteuses de la biocharge.
- lesdites feuilles sont réalisées dans un seul film de matière plastique ou dans des films distincts de matière plastique, ledit film ou lesdits films présentant une rugosité de surface et une épaisseur telles que la force d'adhésion des feuilles dudit empilement empêche tout décollement intempestif desdites feuilles.

Selon l'invention lesdites feuilles sont réalisées dans un seul film de matière plastique présentant une rugosité de surface et une épaisseur telles que la force d'adhésion des feuilles dudit empilement empêche tout décollement intempestif desdites feuilles ainsi plaquées l'une contre l'autre tout en autorisant la séparation de ces feuilles lors de l'introduction d'un élément d'accès à son volume de stockage.
- préalablement à l'étape a) un film continu est formé par extrusion à l'état fondu d'une matière plastique.
De préférence, le film continu est tubulaire et fendu sur ses bords latéraux pour former ledit empilement de feuilles.
Avantageusement, avant de fendre ou couper lesdits bords latéraux, on aura scellé les feuilles de l'empilement dans au moins une partie des zones desdites feuilles destinées à constituer ledit bord périphérique de chaque récipient. Ce scellement desdites feuilles très en amont dans le processus de fabrication dudit au moins un récipient garantit l'absence de contaminants dans le volume de stockage de chaque récipient. Il peut s'agir d'une partie seulement de ces zones, par exemple, pour permettre :
- l'insertion d'un ou plusieurs éléments d'accès, ou
- la réalisation d'un ou plusieurs logements destinés à recevoir chacun un élément d'accès au volume intérieur de stockage, la réalisation de ces logement permettant d'éviter une éventuelle aspiration de particules et/ou de germes lors de l'insertion de chaque élément d'accès entre les feuilles de l'empilement, ou encore
- la réalisation d'une ou plusieurs extensions des parois de la poche sous la forme de tubulures fermées, lesquelles définissent chacune un volume en communication de fluide avec le volume intérieur de stockage de la poche.

Selon l'invention, le film continu est replié sur lui-même en sortie de l'extrudeuse et coupé sur son bord arrondi de manière à former ledit empilement de feuilles.

Également un récipient souple obtenu par le procédé tel que décrit précédemment est divulgué, ledit récipient comprenant deux parois séparées en regard assemblées sur une partie de leur pourtour par un bord périphérique scellé, lesdites parois séparées définissant un volume de stockage du récipient.

Lesdites parois comprennent chacune au moins une extension de paroi placée en saillie d'un bord correspondant de ladite paroi, deux extensions en regard desdites deux parois étant assemblées sur une partie de leur périphérie pour définir un prolongement fermé dudit récipient, dit élément d'accès, lequel définit un volume de réception en communication de fluide avec ledit volume de stockage.

Chaque extension de paroi est donc d'une seule pièce avec la paroi correspondante.

Chaque prolongement forme ainsi partie intégrante du récipient en étant en conséquence réalisé dans le même matériau que les feuilles de l'empilement sans qu'il soit nécessaire d'assembler un élément d'accès rapporté.

Cette extension de paroi est de préférence, conformée également lors de l'étape b) du procédé pour définir un volume de réception prédéfini lorsque deux extensions en regard sont scellées sur une partie de leur périphérie. Avantageusement, ces extensions de paroi ainsi scellées définissent une tubulure fermée à son extrémité libre, cette tubulure fermée définissant une extension du volume de stockage du récipient.

Avantageusement, ledit ou au moins un desdits prolongements fermés comporte sur une partie de sa surface externe un manchon de renfort.

Ce manchon tel qu'un tube en plastique, est assemblé au prolongement fermé correspondant. Il permet de rigidifier ce dernier pour permettre le remplissage, le vidage ou encore des prélèvements dans le volume de stockage du réservoir.

Avantageusement, ce récipient et son ou ses éléments d'accès intégrés ont une forme tridimensionnelle.

De manière avantageuse, ce récipient comporte une pluralité de chambres de stockage reliées entre elles par des portions de mise en communication de fluide. Une de ces chambres au moins a son volume intérieur de stockage en communication de fluide avec une tubulure ou encore un conduit, pour autorise le remplissage de l'ensemble des chambres de stockage. Ces chambres de stockage peuvent être identiques dans leur configuration ou non.

La description concerne encore un récipient souple tridimensionnel, de préférence pour le stockage cryogénique, obtenu par le procédé tel que décrit précédemment.

De préférence, ce récipient souple comprend :
- une première paroi d'un film souple de matière plastique adaptée à un stockage cryogénique, ladite première paroi comportant une première zone dite de bord périphérique, plane ou sensiblement plane s'étendant dans un plan et une deuxième zone dite de cavité placée hors de ce plan en une géométrie tridimensionnelle prédéfinie,
- une seconde paroi recouvrant ladite première paroi pour fermer la deuxième zone et ainsi définir un volume de stockage intérieur,
- un joint formé uniquement par soudure des première et seconde parois dans la première zone plane ou sensiblement plane et au moins un élément d'accès s'étendant au travers dudit joint et fournissant une communication de fluide avec ledit volume de stockage intérieur.

Selon l'invention, ladite deuxième zone de la première paroi comprend une zone plane ou sensiblement plane reliée à ladite première zone plane ou sensiblement plane par une zone de bord qui est elle-même une zone plane ou sensiblement plane reliant de biais lesdites première et deuxième zones planes ou sensiblement planes de la première paroi.

De préférence, ladite seconde paroi est identique à ladite première paroi.

De manière avantageuse, chaque récipient obtenu par le procédé de fabrication de la présente invention est reçu dans un étui de protection qui peut être en verre, en plastique souple ou rigide ou métallique ou encore une combinaison de ces éléments. Ainsi, et à titre purement illustratif, une partie de cet étui de protection est un boîtier métallique tel qu'en aluminium ou en acier inoxydable, tandis qu'une autre partie est en verre ou plastique transparent pour permettre à un opérateur de visualiser le contenu et/ou l'état du récipient en matière plastique logé dans cet étui de protection.

Cet étui de protection peut comporter une fenêtre ou ouverture, de préférence latérale, permettant le passage d'un ou plusieurs éléments de ce récipient, tels que des tubulures ou conduits.

Cet étui de protection présente, de préférence, une forme générale prismatique. Les coins et/ou bords de cet étui peuvent être arrondis pour faciliter leur manipulation.

La présente invention concerne encore un ensemble de moulage pour la fabrication d'au moins un récipient souple en matière plastique selon le procédé tel que décrit précédemment, ledit moule comprenant deux parties de moule qui peuvent être espacées l'une de l'autre et appliquées l'une contre l'autre en étant placées en regard, les deux parties de moule définissant alors lorsqu'elles sont placées l'une contre l'autre, une ou plusieurs cavités, au moins une de ces cavités ainsi formées correspondant à la forme et aux dimensions externes d'un récipient à fabriquer, ladite au moins une cavité étant alors fermée au niveau d'une portion de sa périphérie correspondant à une portion du bord périphérique du récipient correspondant à former, au moins une partie de moule comportant plusieurs orifices reliés à une ou plusieurs unités de pompage pour générer une aspiration au travers desdits orifices.

De préférence, chaque partie de moule comporte plusieurs orifices reliés à une ou plusieurs unités de pompage pour générer une aspiration au travers de ces orifices.

De manière avantageuse, les orifices de chaque partie de moule sont alors uniquement placés au droit de ladite ou desdites cavités définies par les deux parties appliquées l'une contre l'autre, lesdits orifices des deux parties de moule étant placés en regard, ou sensiblement en regard, les uns des autres lorsque les deux parties de moule sont appliquées l'une contre l'autre.

De préférence, ces orifices sont régulièrement espacés pour assurer une force d'aspiration uniforme sur une portion correspondante des feuilles de l'empilement.

Bien entendu, les emplacements des différents orifices dans une partie de moule sont déterminés par les objets à réaliser pour ce récipient souple en matière plastique, chaque orifice venant par aspiration, plaquer une portion d'une feuille de l'empilement contre au moins une partie de la paroi de la cavité dans laquelle il est placé.

De manière avantageuse, ladite au moins une cavité est symétrique, chaque partie de moule étant l'image de l'autre.

Ainsi, et à titre purement illustratif, les deux parties de moule appliquées l'une contre l'autre définissant plusieurs cavités, certaines d'entre elles, avantageusement espacées régulièrement les unes des autres dans une première direction donnée et destinées à définir des chambres de stockage du récipient, présentent chacune :
- à chacune de leurs extrémités opposées, une paroi, dite de face pour une première de ces extrémités et de fond pour l'autre extrémité, qui est plane ou sensiblement plane,
- chacune de ces parois planes, ou sensiblement planes, étant placée dans une seconde direction perpendiculaire à la première direction de manière à définir un volume de stockage.

Au moins une portion de la paroi latérale se dressant à partir de ces parois de face et de fond de chaque partie de moule, a une forme plane ou arrondie pour définir le bord reliant la paroi de fond ou de face de la chambre de stockage correspondante avec le bord périphérique qui est ou sera joint de cette chambre de stockage.

Ladite cavité ou au moins une desdites cavités comprenant à ses extrémités opposées, une paroi de fond plane, ou sensiblement plane, pour conférer une forme plane, ou sensiblement plane, à la portion de feuille plaquée contre la paroi de fond correspondante de cette cavité, les orifices d'aspiration liés à cette cavité sont de préférence placés au niveau desdites parois de fond. Bien entendu, cette paroi de fond présentant une dimension longitudinale et une dimension transversale, le ou les orifices correspondants ont un diamètre strictement inférieur à la dimension transversale de cette paroi de fond.

De plus, on contrôle la dépression créée dans chaque cavité par l'aspiration au travers du ou des orifices correspondants de manière à plaquer sans déformation, par exemple au travers du ou de ces orifices, la portion de feuille contre la paroi de la cavité correspondante.

Avantageusement, au moins une de ces cavités ainsi formées correspond à la forme et aux dimensions externes d'un élément choisi dans le groupe comprenant une tubulure, un conduit, un pontage, un élément d'accès, ladite cavité étant débouchant au moins sur une autre cavité correspondant ou dont au moins une d'entre elles correspond à la forme et aux dimensions externes d'un récipient à fabriquer, de sorte que ledit élément soit en communication de fluide avec le volume de stockage d'au moins un récipient.

De manière avantageuse, au moins une des parties de moule est montée sur des moyens de guidage pour assurer une mise en concordance des deux parties de moule lorsqu'elles sont appliquées l'une contre l'autre et donc éviter un éventuel décalage de ces parties de moule qui pourrait être préjudiciable à la qualité du récipient formé.

De manière plus générale, la présente invention concerne encore un procédé de fabrication d'au moins un récipient souple en matière plastique, chaque récipient comprenant deux parois séparées en regard assemblées sur au moins une partie de leur pourtour par un bord périphérique scellé, lesdites parois séparées définissant un volume de stockage.

Selon l'invention, on réalise au moins les étapes suivantes :
a) à partir d'un unique film continu formé par extrusion, réaliser un empilement de feuilles de matière plastique en sortie de l'extrudeuse à partir dudit film ainsi obtenu, lesdites feuilles étant plaquées l'une contre l'autre, les surfaces en regard de ces feuilles étant placées directement en contact l'une avec l'autre sans aucun élément faisant interface,
b) conformer simultanément lesdites feuilles ainsi plaquées l'une contre l'autre pour définir ledit au moins un récipient sans avoir préalablement séparé celles-ci, au moins chaque récipient étant en partie formé, lesdites feuilles étant maintenues plaquées l'une contre l'autre dans au moins une partie des zones desdites feuilles destinées à constituer ledit bord périphérique de chaque récipient lors de cette conformation, et
c) sceller au moins en partie les zones desdites feuilles destinées à constituer ledit bord périphérique d'au moins chaque récipient.

Ainsi, à l'étape a), on réalise, à partir d'un unique film continu formé par extrusion, un empilement de feuilles directement en sortie de l'extrudeuse de manière à limiter tout risque de contamination des parois internes plaquées l'une contre l'autre de cet empilement. On s'assure ainsi avantageusement de sa stérilité avant de poursuivre la fabrication du récipient.

Ce film unique peut être un film tubulaire que l'on va fendre sur ses bords latéraux pour former ledit empilement de feuilles. Alternativement, le film continu est replié sur lui-même directement en sortie de l'extrudeuse et coupé sur son bord arrondi de manière à former ledit empilement de feuilles. De préférence, avant de fendre ou couper lesdits bords latéraux, on aura scellé les feuilles de l'empilement dans au moins une partie des zones desdites feuilles destinées à constituer ledit bord périphérique de chaque récipient. Ce scellement desdites feuilles très en amont dans le processus de fabrication dudit au moins un récipient garantit l'absence de contaminants dans le volume de stockage de chaque récipient.

Il peut s'agir d'une partie seulement de ces zones, par exemple, pour permettre :
- l'insertion d'un ou plusieurs éléments d'accès, ou
- la réalisation d'un ou plusieurs logements destinés à recevoir chacun un élément d'accès au volume intérieur de stockage, la réalisation de ces logement permettant d'éviter une éventuelle aspiration de particules et/ou de germes lors de l'insertion de chaque élément d'accès entre les feuilles de l'empilement, ou encore
- la réalisation d'une ou plusieurs extensions des parois de la poche sous la forme de tubulures fermées, lesquelles définissent chacune un volume en communication de fluide avec le volume intérieur de stockage de la poche.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 est une vue de dessus d'un ensemble récipient/pontage réalisé selon un premier mode de réalisation de l'invention, cet ensemble n'ayant pas encore été séparé des feuilles ayant permis sa réalisation;
- la figure 2 montre une vue de face de l'ensemble de la figure 1 ;
- la figure 3 est une vue en perspective d'une installation de conformation utilisée pour la fabrication de l'ensemble de la figure 1 selon un mode de réalisation particulier de l'invention ;
- la figure 4 représente schématiquement l'empilement de feuilles plaquées l'une contre l'autre mis en oeuvre pour réaliser l'ensemble récipient/pontage de la fig. 1 ;
- la figure 5 est une vue partielle et élargie de l'empilement de la fig. 4 après conformation, laquelle montre le logement destiné à recevoir un connecteur ;
- la figure 6 est une vue partielle et élargie de l'empilement de la fig. 5 après insertion d'un connecteur dans ledit logement et scellement de ce connecteur dans son logement ;
- la figure 7 est une vue en perspective d'un récipient selon un second mode de réalisation de la présente invention, ce récipient comportant une pluralité de chambres de stockage reliées entre elles et étant reçu dans un étui de protection en vue de la cryoconservation de son contenu ;
- la figure 8 est une vue en perspective du récipient de la fig. 7 après son remplissage et séparation de plusieurs chambres de stockage, une de ces chambres étant représentée à proximité du récipient ;
- la figure 9 est une vue partielle et élargie d'une chambre de stockage du récipient de la figure 7 ;
- la figure 10 est une vue partielle et élargie d'une chambre de stockage du récipient de la figure 7 dont l'extrémité a été découpée pour permettre le prélèvement du contenu de la chambre de stockage.

### DESCRIPTION DETAILLEE DE MODE DE REALISATION DE L'INVENTION

Tout d'abord, on note que les figures ne sont pas à l'échelle.

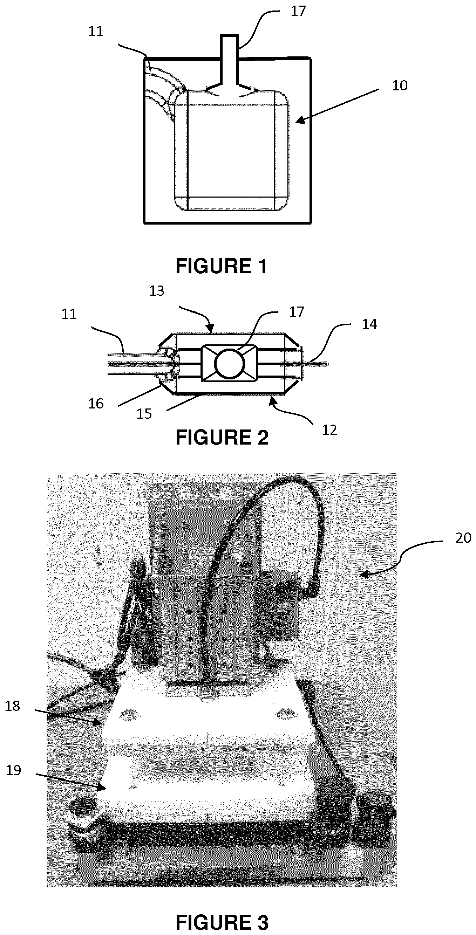

Les Figures 1 et 2 montrent un ensemble comprenant un récipient 10 souple tridimensionnel pour le stockage cryogénique d'une substance biologique et un pontage 11 tubulaire faisant partie intégrante de ce récipient de sorte que ce pontage est en communication de fluide avec le volume de stockage du récipient, ce pontage permettant de relier cet ensemble à un connecteur (non représenté) pour l'introduction de ladite substance biologique selon un mode de réalisation particulier de l'invention.

Ce récipient souple 10 comporte une première paroi 12 et une seconde paroi 13 d'un film souple de matière plastique adaptée à un stockage cryogénique placées en regard l'une de l'autre et assemblées sur leur périphérie par soudure. A titre purement illustratif, cette matière plastique est de l'éthylène-acétate de vinyle (EVA).

La première paroi 12 qui est l'image de la seconde paroi 13, comporte une zone 14 de bord périphérique plane, ou sensiblement plane, dans laquelle sont scellées ces parois 12, 13.

Elle comprend également une zone 15 délimitant une des faces les plus extérieures du récipient 10, laquelle est plane ou sensiblement plane et parallèle à ladite zone 14 de bord périphérique en étant placée à distance de cette dernière pour définir une première chambre de stockage.

Ces zones 14, 15 sont reliées entre elles par une zone 16 de bord qui est plane ou sensiblement plane, laquelle est placée de biais.

Ce récipient souple comporte également un connecteur 17 s'étendant au travers du scellement assemblant les première et seconde parois 12, 13 pour accéder à son volume de stockage vue de son remplissage et/ou de son vidage avec une substance biologique liquide. Ce volume de stockage est ici défini par les chambres de stockage des première et seconde parois 12, 13.

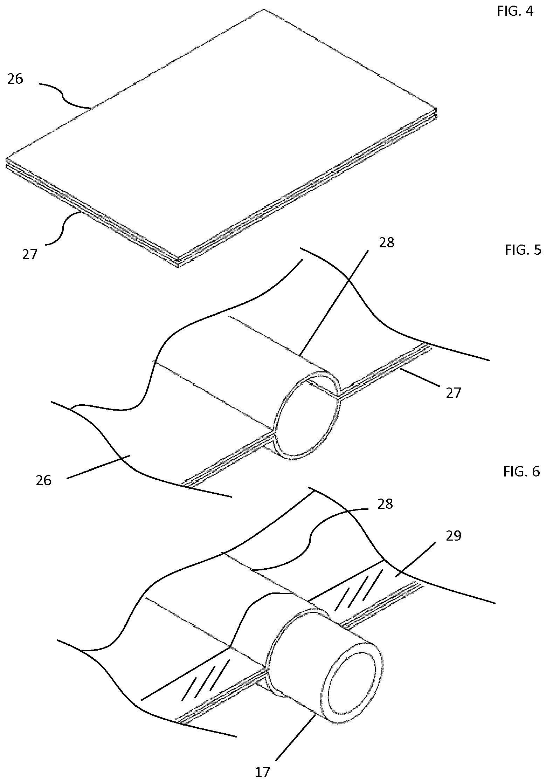

Pour réaliser ce récipient souple, on forme tout d'abord un film continu tubulaire par extrusion à l'état fondu d'une matière plastique, lequel est coupé latéralement pour obtenir un empilement de deux feuilles 26, 27 de matière plastique (Fig. 4).

Ces feuilles 26, 27 sont plaquées directement l'une contre l'autre sans qu'aucun élément externe ne soit introduit entre ces feuilles. Les surfaces en regard de ces feuilles 26, 27 sont directement en contact de manière à ne pas autoriser le passage de contaminants et de germes entre les feuilles. Avantageusement, la force d'adhésion des feuilles 26, 27 de l'empilement empêche tout décollement intempestif de ces feuilles.

On forme en sortie de l'extrudeuse, un bobinage de film en double enroulement.

On déroule ensuite ce bobinage de manière à faire défiler cet empilement de feuilles 26, 27 au niveau d'un poste de soudure.

Là, les feuilles de cet empilement sont assemblées directement dans certaines parties des zones des feuilles destinées à constituer le bord périphérique du récipient 10 à fabriquer ainsi que celles destinées à constituer les bords latéraux du pontage 11.

Ce qui vient d'être décrit pour un ensemble réservoir/pontage est bien entendu répéter autant de fois que nécessaire pour obtenir le nombre d'ensembles à fabriquer en faisant défiler l'empilement de feuilles au niveau de ce poste.

Cependant, à aucun moment, les feuilles de cet empilement ne sont séparées l'une de l'autre avant et durant cette étape de soudure.

Pour chaque ensemble, l'empilement de feuilles 26, 27 ainsi partiellement scellées et plaquées l'une contre l'autre, est ensuite chauffé et placé entre les deux parties 18, 19 de moule d'une installation 20 de moulage par aspiration. L'étape de chauffe préalable à la conformation des feuilles de l'empilement est par exemple réalisée par exposition de l'empilement à des rayonnements. Alternativement, cette étape de chauffe peut être réalisée par soufflage d'air chaud filtré. Cette filtration permet d'envoyer de l'air chaud dépourvu de particules et de germes.

Ces deux parties 18, 19 de moule peuvent être espacées l'une de l'autre et appliquées l'une contre l'autre en définissant alors une première cavité correspondant à la forme et aux dimensions externes du récipient 10 à fabriquer ainsi que la forme et les dimensions d'un logement destiné à recevoir un connecteur 17, et une deuxième cavité en communication avec la première cavité pour définir le pontage 11.

Lorsque les deux parties 18, 19 de moule sont appliquées l'une contre l'autre, les cavités sont fermées au niveau de leur périphérie. La cavité permettant de réaliser en partie le réservoir souple, est ainsi fermée au niveau de sa périphérie correspondant à une portion du bord périphérique du récipient correspondant à former et de sa périphérie correspondant au logement 28 pour connecteur 17 à former.

Avantageusement, seule une des parties 18, 19 de moule comporte ces cavités lesquelles sont reliées par des orifices à une ou plusieurs unités de pompage pour générer l'aspiration requise à la conformation de l'empilement de feuilles scellées.

On s'assure ainsi que les feuilles 26, 27 de cet empilement sont conformées simultanément sans séparation, ce qui limite grandement les risques d'une éventuelle contamination. La séparation des parois du récipient ainsi mises en forme pour délimiter partiellement le volume de stockage est obtenue ultérieurement lors du remplissage du récipient ainsi fabriqué avec la substance biologique.

Pour chaque ensemble, on réalise une étape de découpage permettant de libérer cet ensemble. De manière avantageuse, ce logement 28 formé pour la réception d'un connecteur 17, est fermé de manière à éviter toute introduction de contaminants lors de l'opération de découpage.

En outre, une fois les films scellés et découpés, la réalisation de ce logement 28 permet d'éviter de séparer les feuilles de l'empilement pour insérer le connecteur 17 et donc de générer une aspiration des particules et germes via l'air extérieur.

Enfin, on scelle le connecteur 17 avec le bord périphérique 29 du récipient souple à fabriquer (Fig. 6).

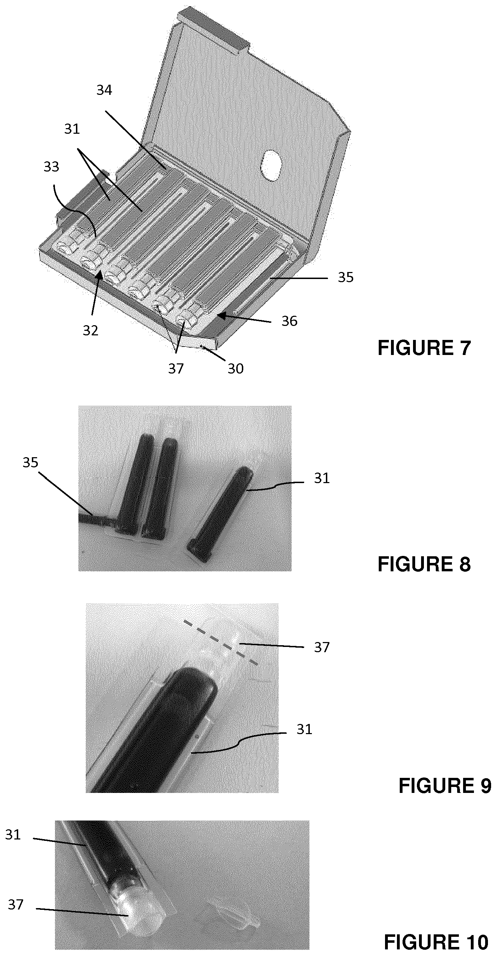

Un second mode de réalisation d'un récipient de la présente invention sera décrit ci-après en référence aux Figures 7 à 10. Ce récipient est reçu dans un étui 30 de protection métallique en vue de sa manipulation et de son stockage cryogénique.

Ce récipient présente une forme allongée, ici rectangulaire, lorsque regardé en vue de dessus, définissant un premier axe longitudinal. Ce récipient comporte une pluralité de chambres 31 de stockage, ici six (6), lesquelles sont alignées en étant espacées régulièrement les unes des autres. La zone 32 de séparation séparant deux chambres 31 de stockage successives présente une ligne 33 de moindre résistance, ou pré-découpe, permettant avantageusement une séparation aisée des chambres 31 de stockage.

Chaque chambre 31 de stockage a une forme allongée s'étendant le long d'un deuxième axe longitudinal perpendiculaire audit premier axe longitudinal.

Deux chambres 31 de stockage consécutives sont également reliées à leur base, ou partie inférieure, par une portion 34 de conduit assurant la mise en communication de fluide des volumes de stockage de ces chambres 31 de stockage.

Le récipient comporte également une tubulure 35 souple placée sur un bord latéral du récipient et en communication de fluide via chaque portion 34 de conduit de mise en communication de fluide, avec le volume de stockage de chacune des chambres 31 de stockage.

Cette tubulure 35 qui sert de port d'entrée du récipient, assure une introduction aisée dans chaque chambre 31 de stockage, du médicament liquide, des cellules telles que des cellules souches ou encore du sang, à conserver par cryogénie.

Chaque chambre 31 de stockage individuelle présente une forme tridimensionnelle pour assurer un stockage optimisé, cette forme présentant une dimension longitudinale (ici hauteur) dans une première direction définie par ledit deuxième axe longitudinal, qui est à la fois plus grande que la dimension longitudinale (ici largeur) dans une deuxième direction définie par ledit premier axe longitudinal et que la dimension longitudinale (ici épaisseur) dans une troisième direction perpendiculaire à la première direction et à la deuxième direction.

Ainsi, chaque chambre 31 de stockage individuelle forme saillie de part et d'autre d'un plan 36 médian défini par l'empilement de feuilles non conformées mais assemblées entre elles par exemple par soudure. Les deux portions de chaque chambre 31 de stockage placées en regard en formant saillie de ce plan 36 médian sont symétriques, ou constituent l'image l'une de l'autre, par rapport à ce plan médian.

A l'exception de son extrémité supérieure, le corps de chaque chambre de stockage comporte ainsi une paroi de fond plane, ou sensiblement plane, et une paroi de face, plane ou sensiblement plane, qui sont toutes les deux placées dans ladite troisième direction, à distance dudit plan 36 médian et tout en étant distincte pour définir le volume de stockage de la chambre. Ces parois de face et de fond sont reliées au bord périphérique de la chambre 31 de stockage s'étendant dans le plan 36 médian, par des parois latérales ayant une forme arrondie ou plane ou sensiblement plane. Dans ce dernier cas, ces parois latérales peuvent être placées de biais.

L'extrémité supérieure de chaque chambre de stockage comporte un port 37 de prélèvement de forme tridimensionnelle lequel est stérile et vide. Ce port 37 de prélèvement est séparé du volume de stockage de la chambre de stockage correspondante par une ligne de jonction étanche, par exemple obtenue par soudure, réalisée au niveau d'une cheminée 38 de la chambre 31 de stockage.

Comme représenté sur la Figure 10, ce port 37 de prélèvement est configuré pour définir un logement lorsqu'il a été ouvert par découpe transversale, destiné à recevoir un trocart (non représenté) tout en assurant l'étanchéité de sa jonction avec ce dernier.

## Revendications

1. Procédé de fabrication d'au moins un récipient (10) souple en matière plastique, chaque récipient (10) comprenant deux parois (12, 13) séparées en regard assemblées sur au moins une partie de leur pourtour par un bord périphérique (14) scellé, lesdites parois séparées définissant un volume de stockage du récipient (10), **caractérisé en ce qu'**on réalise au moins les étapes suivantes :
d) à partir d'un unique film continu formé par extrusion au moyen d'une extrudeuse, réaliser un empilement de deux feuilles (26, 27) de matière plastique en sortie de l'extrudeuse à partir dudit film ainsi obtenu, lesdites feuilles (26, 27) étant plaquées l'une contre l'autre, les surfaces en regard de ces feuilles (26, 27) étant placées directement en contact l'une avec l'autre sans aucun élément faisant interface,
e) conformer simultanément lesdites feuilles (26, 27) ainsi plaquées l'une contre l'autre pour définir ledit au moins un récipient (10) sans avoir préalablement séparé celles-ci, au moins chaque récipient (10) étant en partie formé, lesdites feuilles (26, 27) étant maintenues plaquées l'une contre l'autre dans au moins une partie des zones desdites feuilles (26, 27) destinées à constituer ledit bord périphérique (14) de chaque récipient (10) lors de cette conformation, ladite conformation étant réalisée par moulage par aspiration en plaçant ledit empilement entre deux parties de moules qui peuvent être espacées l'une de l'autre et appliquées l'une contre l'autre en définissant alors une ou plusieurs cavités, au moins une de ces cavités ainsi formées correspondant à la forme et aux dimensions externes d'un récipient (10) à fabriquer, ladite au moins une cavité étant alors fermée au niveau d'une portion de sa périphérie correspondant à une portion du bord périphérique (14) du récipient (10) correspondant à former, au moins une desdites parties de moule comportant plusieurs orifices reliés à une ou plusieurs unités de pompage,
f) sceller au moins en partie les zones desdites feuilles (26, 27) destinées à constituer ledit bord périphérique (14) d'au moins chaque récipient (10).

2. Procédé selon la revendication 1, **caractérisé en ce qu'**on réalise une étape supplémentaire consistant pour chaque récipient (10), à insérer entre lesdites feuilles (26, 27) au moins un élément d'accès (17) à son volume de stockage permettant la communication de fluide entre ce volume de stockage et l'extérieur.

3. Procédé selon la revendication 1 ou 2, **caractérisé en ce qu'**on scelle au moins en partie les zones desdites feuilles (26, 27) destinées à constituer ledit bord périphérique (14) de chaque récipient (10) avant de réaliser l'étape b).

4. Procédé selon l'une quelconque des revendications 1 à 3, **caractérisé en ce qu'**à l'étape b), on définit également par conformation desdites feuilles (26, 27), un logement, pour chaque élément d'accès (17) au volume de stockage du ou des récipients (10), chaque logement étant configuré pour recevoir l'élément d'accès (17) correspondant.

5. Procédé selon l'une quelconque des revendications 1 à 3, **caractérisé en ce qu'**à l'étape b), on définit également par conformation desdites feuilles (26, 27) au moins un prolongement fermé, dit d'élément d'accès (17), du ou d'au moins certains desdites récipients (10), chaque prolongement fermé définissant un volume de réception en communication de fluide avec ledit volume de stockage du récipient (10) correspondant.

6. Procédé selon l'une quelconque des revendications 1 à 5, **caractérisé en ce qu'**à l'étape b), on définit également par conformation desdites feuilles (26, 27) au moins un conduit, ou pontage (11), relié à un bord périphérique (14) d'au moins un récipient (10) pour assurer son remplissage, ledit conduit définissant un canal intérieur en communication de fluide avec le volume de stockage dudit au moins un récipient.

7. Procédé selon la revendication 6, **caractérisé en ce qu'**ayant rempli ledit ou lesdits récipients (10), on scelle le reste des feuilles (26, 27) séparées au niveau dudit bord périphérique (14) de chaque récipient (10) de manière à fermer chaque récipient (10).

8. Procédé selon l'une quelconque des revendications 1 à 7, **caractérisé en ce qu'**à l'étape b), lesdites feuilles (26, 27) sont également maintenues plaquées l'une contre l'autre en au moins une zone distincte dudit bord périphérique (14) d'un ou plusieurs récipients (10) pour fractionner le volume interne du ou des récipients (10) correspondants.

9. Procédé selon l'une quelconque des revendications 1 à 8, **caractérisé en ce qu'**à l'étape b), on conforme simultanément lesdites deux feuilles (26, 27) en au moins un récipient (10) souple sans séparer lesdites feuilles (26, 27) lors de cette conformation.

10. Procédé selon la revendication 9, **caractérisé en ce qu'**après l'étape c), on sépare lesdites feuilles (26, 27) au niveau dudit au moins un récipient (10) par l'introduction du seul matériau biologique destiné à être contenu dans ce récipient (10) de manière à limiter sa contamination ou par circulation d'un fluide gazeux contrôlé.

11. Procédé selon l'une quelconque des revendications 1 à 10, **caractérisé en ce qu'**après l'étape b) et avant l'étape c), on réalise une étape supplémentaire consistant à refroidir ledit au moins un récipient (10).

12. Procédé selon l'une quelconque des revendications 1 à 11, **caractérisé en ce que** tout au long d'au moins lesdites étapes a) à c), on contrôle le milieu dans lequel est placé ledit empilement de deux feuilles (26, 27) de manière à limiter la présence de la biocharge et de particules susceptibles de transporter ladite biocharge.

13. Procédé selon la revendication 12, **caractérisé en ce qu'**au niveau du dispositif ou de la machine permettant de réaliser l'étape b), on fait circuler un flux d'air de haut en bas pour plaquer vers le sol les particules ou la biocharge présentes dans l'atmosphère environnant ledit dispositif.

14. Procédé selon l'une quelconque des revendications 1 à 13, **caractérisé en ce qu'**on déionise ledit empilement pour éliminer les charges électrostatiques.

## Patentansprüche

1. Verfahren zur Herstellung mindestens eines flexiblen Behälters (10) aus Plastikmaterial, wobei jeder Behälter (10) zwei gegenüberliegende getrennte Wände (12, 13) umfasst, die an mindestens einem Teil ihres Umfangs durch einen umlaufenden abgedichteten Rand (14) zusammengesetzt sind, wobei die getrennten Wände ein Stauvolumen des Behälters (10) definieren, **dadurch gekennzeichnet, dass** mindestens die folgenden Schritte durchgeführt werden:
d) Realisieren aus einem einzigen fortlaufenden Film, der durch Extrudieren anhand eines Extruders gebildet wird, einer Stapelung aus zwei Folien (26, 27) aus Plastikmaterial am Ausgang des Extruders ausgehend von dem so erhaltenen Film, wobei die Folien (26, 27) aneinandergepresst werden, wobei die gegenüberliegenden Oberflächen dieser Folien (26, 27) ohne ein eine Schnittstelle bildendes Element direkt in Kontakt miteinander platziert werden,
e) gleichzeitig Anpassen der so aneinandergepressten Folien (26, 27), um den mindestens einen Behälter (10) zu definieren, ohne diese zuvor getrennt zu haben, wobei mindestens jeder Behälter (10) teilweise gebildet wird, wobei die Folien (26, 27) in mindestens einem Teil der Zonen der Folien (26, 27) aneinandergepresst gehalten werden, die dazu bestimmt sind, den umlaufenden Rand (14) jedes Behälters (10) bei diesem Anpassen zu bilden, wobei das Anpassen durch Saugformen realisiert wird, indem man die Stapelung zwischen zwei Formteilen platziert, die voneinander beabstandet, und aneinander angelegt sein können, wodurch ein oder mehrere Hohlräume definiert werden, wobei mindestens einer dieser so gebildeten Hohlräume der Form und den äußeren Abmessungen eines herzustellenden Behälters (10) entspricht, wobei der mindestens eine Hohlraum im Bereich eines Abschnitts seiner Peripherie, der einem Abschnitt des umlaufenden Randes (14) des entsprechenden zu bildenden Behälters (10) entspricht, somit geschlossen ist, wobei mindestens einer der Formteile mehrere Öffnungen beinhaltet, die mit einer oder mehreren Pumpeinheiten verbunden sind,
f) Abdichten mindestens eines Teils der Zonen der Folien (26, 27), die dazu bestimmt sind, den umlaufenden Rand (14) mindestens jedes Behälters (10) darzustellen.

2. Verfahren nach Anspruch 1, **dadurch gekennzeichnet, dass** man einen zusätzlichen Schritt realisiert, der für jeden Behälter (10) darin besteht, zwischen die Folien (26, 27) mindestens ein Zugangselement (17) zu seinem Stauvolumen einzuführen, welches die Kommunikation von Fluid zwischen diesem Stauvolumen und der Außenseite ermöglicht.

3. Verfahren nach Anspruch 1 oder 2, **dadurch gekennzeichnet, dass** vor dem Realisieren von Schritt b) mindestens teilweise die Zonen der Folien (26, 27) abgedichtet werden, die dazu bestimmt sind, den umlaufenden Rand (14) jedes Behälters (10) darzustellen.

4. Verfahren nach einem der Ansprüche 1 bis 3, **dadurch gekennzeichnet, dass** im Schritt b) ebenfalls durch Anpassen der Folien (26, 27) eine Aufnahme für jedes Zugangselement (17) zu dem Stauvolumen des oder der Behälter (10) definiert wird, wobei jede Aufnahme konfiguriert ist, um das entsprechende Zugangselement (17) zu empfangen.

5. Verfahren nach einem der Ansprüche 1 bis 3, **dadurch gekennzeichnet, dass** im Schritt b) ebenfalls durch Anpassen der Folien (26, 27) mindestens eine geschlossene Verlängerung, Zugangselement (17) genannt, des oder mindestens einiger der Behälter (10) definiert wird, wobei jede geschlossene Verlängerung ein Empfangsvolumen in Fluidkommunikation mit dem Stauvolumen des entsprechenden Behälters (10) definiert.

6. Verfahren nach einem der Ansprüche 1 bis 5, **dadurch gekennzeichnet, dass** im Schritt b) ebenfalls durch Anpassen der Folien (26, 27) mindestens eine Leitung, oder Überbrückung (11) definiert wird, die mit einem umlaufenden Rand (14) mindestens eines Behälters (10) verbunden ist, um für seine Füllung zu sorgen, wobei die Leitung einen Innenkanal in Fluidkommunikation mit dem Stauvolumen des mindestens einen Behälters definiert.

7. Verfahren nach Anspruch 6, **dadurch gekennzeichnet, dass** nach dem Füllen des oder der Behälter (10) der Rest der im Bereich des umlaufenden Randes (14) jedes Behälters (10) getrennten Folien (26, 27) abgedichtet wird, um jeden Behälter (10) zu schließen.

8. Verfahren nach einem der Ansprüche 1 bis 7, **dadurch gekennzeichnet, dass** die Folien (26, 27) im Schritt b) auch in mindestens einer Zone, die sich von dem umlaufenden Rand (14) eines oder mehrerer Behälter (10) unterscheidet, aneinandergepresst gehalten werden, um das Innenvolumen des oder der entsprechenden Behälter(s) (10) zu unterteilen.

9. Verfahren nach einem der Ansprüche 1 bis 8, **dadurch gekennzeichnet, dass** im Schritt b) gleichzeitig die beiden Folien (26, 27) in mindestens einem flexiblen Behälter (10) angepasst werden, ohne die Folien (26, 27) bei diesem Anpassen zu trennen.

10. Verfahren nach Anspruch 9, **dadurch gekennzeichnet, dass** nach dem Schritt c) die Folien (26, 27) im Bereich des mindestens einen Behälters (10) durch Einführen des einzigen biologischen Materials, das dazu bestimmt ist, in diesem Behälter (10) enthalten zu sein, um dessen Kontamination zu beschränken, oder durch Zirkulieren eines kontrollierten gasförmigen Fluids, getrennt werden.

11. Verfahren nach einem der Ansprüche 1 bis 10, **dadurch gekennzeichnet, dass** nach dem Schritt b) und vor dem Schritt c) ein zusätzlicher Schritt realisiert wird, der darin besteht, den mindestens einen Behälter (10) zu kühlen.

12. Verfahren nach einem der Ansprüche 1 bis 11, **dadurch gekennzeichnet, dass** während mindestens der Schritte a) bis c) das Milieu, in dem die Stapelung der beiden Folien (26, 27) platziert wird, kontrolliert wird, um die Präsenz der Biocharge und von Teilchen zu beschränken, die die Biocharge transportieren könnten.

13. Verfahren nach Anspruch 12, **dadurch gekennzeichnet, dass** man im Bereich der Vorrichtung oder der Maschine, die es ermöglicht, den Schritt b) zu realisieren, einen Luftstrom von oben nach unten zirkulieren lässt, um die Teilchen oder die Biocharge, die in der umgebenden Atmosphäre der Vorrichtung vorhanden sind, an den Boden zu pressen.

14. Verfahren nach einem der Ansprüche 1 bis 13, **dadurch gekennzeichnet, dass** man die Stapelung entionisiert, um die elektrostatischen Lasten zu eliminieren.

## Claims

1. Method of manufacturing at least one flexible plastic container (10), each container (10) comprising two separate walls (12, 13) facing one another, joined on at least one part of the circumference thereof by a sealed peripheral edge (14), said separate walls defining a storage space of the container (10), **characterised in that** at least the following steps are carried out:
d) using a single continuous film formed by extrusion by means of an extruder, producing a stack of two sheets (26, 27) of plastic material at the output of the extruder from said film thus obtained, said sheets (26, 27) being pressed against one another, the surfaces which face one another of these sheets (26, 27) being placed directly in contact with one another without any element acting as an interface,
e) simultaneously shaping said sheets (26, 27) thus pressed against one another in order to define said at least one container (10) without the previous separation thereof, at least each container (10) being partially formed, said sheets (26, 27) being held pressed against one another in at least one part of the areas of said sheets (26, 27) intended to constitute said peripheral edge (14) of each container (10) during this shaping, said shaping being carried out by suction moulding by placing said stack between two mould parts which can be spaced apart from one another and brought to bear one against the other thus defining one or more cavities, at least one of these cavities thus formed corresponding to the shape and the external dimensions of a container (10) to be manufactured, said at least one cavity then being closed at a portion of the periphery thereof corresponding to a portion of the peripheral edge (14) of the corresponding container (10) to be formed, at least one of said mould parts including a plurality of orifices connected to one or more pump units,
f) at least partially sealing the areas of said sheets (26, 27) intended to constitute said peripheral edge (14) of at least each container (10).

2. Method according to claim 1, **characterised in that** an additional step is carried out, which consists for each container (10) of inserting between said sheets (26, 27) at least one element (17) for providing access to the storage space thereof, allowing fluid communication between this storage space and the exterior.

3. Method according to claim 1 or 2, **characterised in that** the areas of said sheets (26, 27) intended to constitute said peripheral edge (14) of each container (10) are at least partially sealed before carrying out step b).

4. Method according to any one of claims 1 to 3, **characterised in that** in step b), also by shaping said sheets (26, 27), a recess is defined for each element (17) providing access to the storage space of the one or more containers (10), each recess being configured to receive the corresponding access element (17).

5. Method according to any one of claims 1 to 3, **characterised in that** in step b), also by shaping said sheets (26, 27), at least one closed elongation is defined, referred to as an access element (17), of said or of at least some of said containers (10), each closed elongation defining a reception space in fluid communication with said storage space of the corresponding container (10).

6. Method according to any one of claims 1 to 5, **characterised in that** in step b), also by shaping said sheets (26, 27), at least one conduit, or bridging link (11) is defined, connected to a peripheral edge (14) of at least one container (10) to ensure the filling thereof, said conduit defining an internal channel in fluid communication with the storage space of said at least one container.

7. Method according to claim 6, **characterised in that**, having filled said one or more containers (10), the remainder of the sheets (26, 27) separated at said peripheral edge (14) of each container (10) are sealed in order to close each container (10).

8. Method according to any one of claims 1 to 7, **characterised in that** in step b), said sheets (26, 27) are also held pressed against one another in at least one distinct area of said peripheral edge (14) of one or more containers (10) in order to divide the internal space of the one or more corresponding containers (10).

9. Method according to any one of claims 1 to 8, **characterised in that** in step b), said two sheets (26, 27) are simultaneously shaped to form at least one flexible container (10) without separating said sheets (26, 27) during this shaping.

10. Method according to claim 9, **characterised in that** after step c), said sheets (26, 27) are separated at said at least one container (10) by inserting the sole biological material intended to be contained in this container (10) so as to limit the contamination thereof, or by circulating a controlled gaseous fluid.

11. Method according to any one of claims 1 to 10, **characterised in that**, after step b) and before step c), an additional step is carried out consisting of cooling said at least one container (10).

12. Method according to any one of claims 1 to 11, **characterised in that**, throughout the duration of at least said steps a) to c), the environment in which said stack of two sheets (26, 27) is placed is controlled so as to limit the presence of the bioburden and of particles capable of carrying said bioburden.

13. Method according to claim 12, **characterised in that**, at the device or the machine allowing step b) to be carried out, an air flow is circulated from top to bottom in order to press the particles or the bioburden present in the atmosphere in the vicinity of said device towards the ground.

14. Method according to any one of claims 1 to 13, **characterised in that** said stack is deionised in order to remove electrostatic charges.
